# EUROPEAN PATENT SPECIFICATION

(11) **EP 0 472 271 B1**
(45) Date of publication and mention of the grant of the patent: **17.08.1994**
(21) Application number: 91305689.1
(22) Date of filing: 24.06.1991
(51) Int. Cl.: B25C 1/04, F16J 15/56

(54) **Piston structure for fastener driving machine**
Kolbenaufbau für Einschlagmaschine für Befestigungsmittel
Construction de piston d'une machine pour l'enfoncement d'attaches

(30) Priority: 22.06.1990 JP 66346/90 U; 25.03.1991 JP 18028/91 U
(43) Date of publication of application: 26.02.1992
(73) Proprietor: HITACHI KOKI CO., LTD., Chiyoda-ku, Tokyo (JP)
(72) Inventor: Akiba, Yoshitaka, Katsuta-shi, Ibaraki-ken (JP); Ichikawa, Kaora, Katsuta-shi, Ibaraki-ken (JP); Hamada, Masao, Katsuta-shi, Ibaraki-ken (JP); Yamamoto, Kunio, Katsuta-shi, Ibaraki-ken (JP)
(74) Representative: Senior, Alan Murray

(56) References cited:
- DE-A- 2 614 263
- GB-A- 2 235 736
- US-A- 3 990 712

## Description

The present invention relates to a pneumatically powered fastener driving machine, such as a pneumatically powered nailing machine, and more particularly to a piston structure as defined in the pre-characterising portion of Claim 1 for use in a pneumatically driven fastener driving machine.

The pre-characterising portion of Claim 1 is based on the disclosure of the document US-A-3990712.

Pneumatically powered fastener driving machines, such as pneumatically powered nailing machines, have a piston slidably fitted in a cylinder, with a drive bit connected to the piston. The piston supports an O-ring inserted in a radially outwardly open groove defined centrally in an outer circumferential surface thereof, and a piston ring partly disposed in the groove and held slidably against an inner circumferential surface of the cylinder under the bias of the O-ring. The piston with the O-ring and the piston ring is of an oilless structure. Since the outer circumferential surface of the piston ring is resiliently pressed against the inner circumferential surface of the cylinder under the bias of the O-ring, the piston ring provides a hermetical seal against air leakage between the slidably contacting surfaces of the piston ring and the cylinder. The outer circumferential surface of the piston is radially spaced from the inner circumferential surface of the cylinder so that the piston is kept out of contact with the cylinder for protection against damage which would otherwise occur due to direct hitting engagement with each other.

However, if a fastener, such as a nail, supplied from a fastener magazine gets jammed in the drive path for the drive bit, then when the drive bit is actuated under pneumatic pressure to drive the fastener out of the drive path, the drive bit is hampered by the jamming fastener. The pneumatic pressure is continuously supplied to act on the piston, and the pressure buildup becomes so large that the O-ring is elastically deformed, allowing the piston to be tilted in the cylinder. The piston may be so tilted that it hits and damages the inner circumferential surface of the cylinder. The drive bit, which is being longitudinally loaded by the pressure buildup, is now subjected to the bending moment and finally bent out of shape. Sometimes, the drive bit becomes plastically deformed or buckled, making itself useless or requiring a replacement.

The above conventional pneumatically powered fastener driving machines are disclosed in Japanese Laid-Open Utility Model Publications Nos. 63-186571 and 2-23970, for example.

US-A-3,990,712 discloses a piston seal for an internal combustion engine in which a guide sleeve is provided either side of the contact ring and an axially wide core ring provided to urge the contact ring outward with a force proportional to the pressure differential across the seal.

It is an aim of the present invention to provide a piston structure for use in a pneumatically powered fastener driving machine, which piston structure is effective to prevent a drive bit from being bent or buckled under an excessive pressure buildup.

According to the present invention, there is provided a piston structure for use in a cylinder in a pneumatically powered fastener driving machine, comprising:
a piston adapted to be slidably disposed in the cylinder and to be connected to a drive bit, said piston having a first groove defined in an outer circumferential surface thereof, and a second groove defined therein radially inwardly of said first groove, said first groove being wider than said second groove in an axial direction of said piston;
an elastomeric annular core disposed in said second groove; and
a piston ring assembly disposed in said first groove, said first groove having bottom surfaces positioned one on each side of said second groove and supporting said piston ring assembly thereon, characterised in that
said annular core is an O-ring; and
said piston ring assembly comprises first, second, and third piston rings, each being made of a composite of polyimide and polytetrafluoroethylene, said first and third piston rings being supported on said bottom surfaces, respectively, said second piston ring being positioned between said first and third piston rings in said axial direction, said O-ring being held out of contact with said first and third piston rings and in contact with only said second piston ring for normally urging only the second piston ring radially outwardly with respect to said piston so as to be slidably held against an inner circumferential surface of the cylinder.

The above and other aims, features, and advantages of the present invention will become apparent from the following description when taken in conjunction with the accompanying drawings which illustrate a preferred embodiment of the present invention by way of example, and in which:
Fig. 1 is a vertical cross-sectional view of a pneumatically powered fastener driving machine which incorporates a piston structure according to the preferred embodiment of the present invention; and
Fig. 2 is an enlarged fragmentary cross-sectional view of the piston structure shown in an encircled area A in Fig. 1;

Like or corresponding parts are denoted by like or corresponding reference characters throughout views.

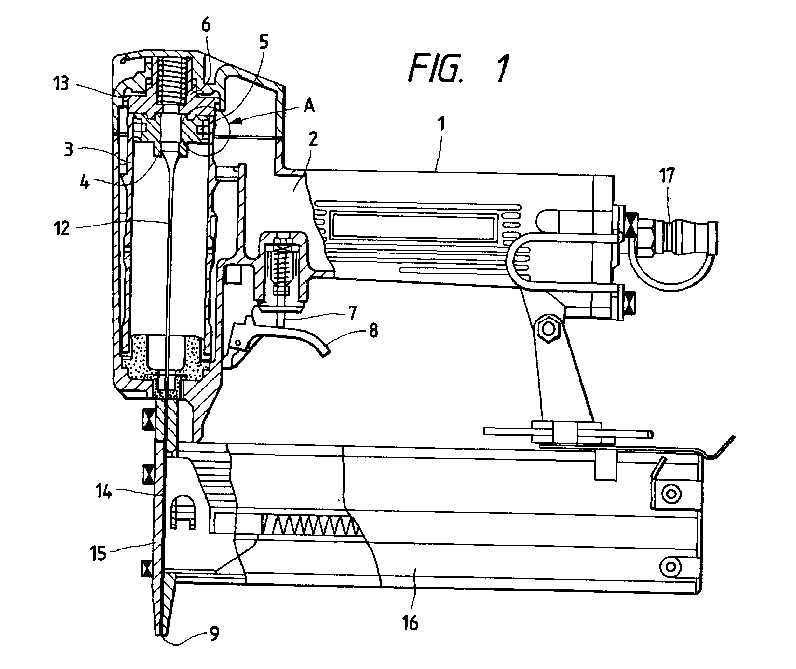

Fig. 1 shows a pneumatically powered fastener driving machine such as a pneumatically powered nailing machine. The fastener driving machine has a handle 1 defining therein a pneumatic chamber 2 and connected to a housing 13 which accommodates a cylinder 3. A piston 4 is slidably fitted in the cylinder 3, and a drive bit 12 is connected at one end to the piston 4. The drive bit 12 extends coaxially in the cylinder 3 and is longitudinally movable in drive path 14 defined in a nose assembly 15 in alignment therewith. The drive path 14 terminates in an ejection port 9. To the handle 1, there is coupled a fastener magazine 16 for feeding fasteners such as nails, one at a time, to the drive path 14.

The pneumatic chamber 2 is supplied with air under pressure from a compressed air source (not shown) through a fitting 17 attached to the handle 1. When a trigger 8 is pulled by the user of the fastener driving machine, a valve 7 is actuated to lift a valve 6 above the cylinder 3, allowing the compressed air to flow from the pneumatic chamber 2 into the cylinder 3 above the piston 4. The piston 4 is now quickly driven downwardly under the air pressure, causing the drive bit 12 to move downwardly in the drive path 14 until it drives the fastener out of the ejection port 9 into a workpiece (not shown).

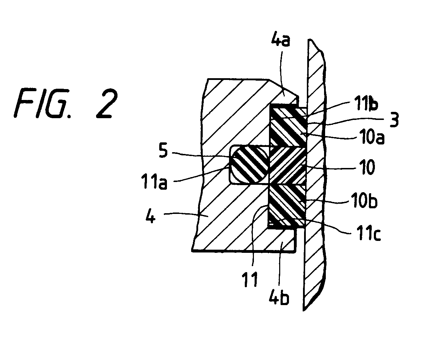

FIG. 2 shows a piston structure of the piston 4. More specifically, the piston 4 has a radially outwardly open wider groove 11 defined in an outer circumferential surface thereof, and a radially outwardly open narrower groove 11a defined substantially centrally in the bottom of the groove 11 and extending radially inwardly perpendicularly to the groove 11. The groove 11a accommodates therein an O-ring 5 of an elastomeric material, and the groove 11 receives at least three piston rings 10, 10a, 10b each of a rectangular cross section. The piston ring 10 is centrally positioned in contact with the O-ring 5, and the piston rings 10a, 10b are disposed axially one on each side of the piston ring 10. The piston rings 10a, 10b are retained in place by respective axially spaced retaining walls 4a, 4b of the piston 4 which define the wider groove 11 axially therebetween. The piston rings 10, 10a, 10b are held in contact with an inner circumferential surface of the cylinder 3, with the central piston ring 10 being urged against the cylinder 3 under the bias of the O-ring 5.

The piston rings 10a, 10b are disposed respectively on bottom surfaces 11b, 11c of the groove 11 which are positioned one on each side of the groove 11a, and are located radially between the bottom surfaces 11b, 11c and the inner circumferential surface of the cylinder 3. The radial gaps or clearances between the bottom of the groove 11, the piston rings 10, 10a, 10b, and the inner circumferential surface of the cylinder 3 are large enough to allow the piston 4 to slide in the cylinder 3, but small enough to minimize any angular displacement of the piston 4 with respect to the longitudinal axis of the cylinder 3.

Each of the piston rings 10, 10a, 10b is made of a composite of polyimide and polytetrafluoroethylene, which is known as Kerimide or Kinel in the market. For general features of Kerimide and Kinel, reference should be made to Industrial material, page 104, Table 2, published by Nikkan Kogyo Shinbunsha, January 1985 (Vol. 33, No. 1). The piston rings 10, 10a, 10b of the above material is higher in mechanical strong than elastomeric rings.

The piston rings 10a, 10b are supported radially by the rigid bottom surfaces 11b, 11c of the groove 11 in the piston 4 and axially by the retaining walls 4a, 4b of the piston 4. The piston rings 10a, 10b are held in sliding contact with the cylinder 3 through a relatively wide area in the axial direction. The piston rings 10a, 10b thus provides stable and wide support for the piston 4 with respect to the cylinder 3. Therefore, even if the drive bit 12 is subjected to excessive longitudinal loads or impacts by a fastener that is supplied from the fastener magazine 16 and jammed in the drive path 14, the piston 4 simply stops and is prevented from being tilted with respect to or into contact with the cylinder 3. Accordingly, the drive bit 12 is prevented from being permanently bent or buckled.

## Claims

1. A piston structure for use in a cylinder (3) in a pneumatically powered fastener driving machine, comprising:
a piston (4) adapted to be slidably disposed in the cylinder and to be connected to a drive bit (12), said piston having a first groove (11) defined in an outer circumferential surface thereof, and a second groove (11a) defined therein radially inwardly of said first groove, said first groove being wider than said second groove in an axial direction of said piston;
an elastomeric annular core (5) disposed in said second groove; and
a piston ring assembly (10, 10a, 10b) disposed in said first groove, said first groove having bottom surfaces (11b, 11c) positioned one on each side of said second groove and supporting said piston ring assembly thereon, characterised in that
said annular core is an O-ring; and
said piston ring assembly comprises first, second, and third piston rings, each being made of a composite of polyimide and polytetrafluoroethylene, said first and third piston rings (10a, 10b) being supported on said bottom surfaces, respectively, said second piston ring (10) being positioned between said first and third piston rings in said axial direction, said O-ring being held out of contact with said first and third piston rings and in contact with only said second piston ring for normally urging only the second piston ring radially outwardly with respect to said piston so as to be slidably held against an inner circumferential surface of the cylinder.

2. A piston structure according to claim 1, wherein said O-ring and said second piston ring have substantially the same width as each other in said axial direction.

3. A piston structure according to claim 1, wherein said second groove and said second piston ring have substantially the same width as each other in said axial direction.

4. A pneumatically powered fastener driving machine incorporating a piston structure according to any one of the preceding claims.

## Patentansprüche

1. Ein Kolbenaufbau für die Verwendung in einem Zylinder (3) in einer pneumatisch angetriebenen Befestigertreibmaschine, mit:
einem Kolben (4), der dazu angepaßt ist, gleitfähig in dem Zylinder angeordnet zu sein und mit einem Treibende (12) verbunden zu sein, wobei der Kolben eine erste Rille (11) aufweist, die in einer äußeren Umfangsoberfläche davon festgelegt ist, und eine zweite Rille (11a), die darin radial einwärts der ersten Rille definiert ist, wobei die erste Rille breiter als die zweite Rille in einer axialen Richtung des Kolbens ist;
einem elastomeren ringförmigen Kern (5), der in der zweiten Rille angeordnet ist; und
einer Kolbenringanordnung (10, 10a, 10b) die in der ersten Rille angeordnet ist, wobei die erste Rille Bodenoberflächen (11b, 11c) aufweist, die einer auf jeder Seite der zweiten Rille positioniert sind und die Kolbenringanordnung darauf tragen, dadurch gekennzeichnet, daß der ringförmige Kern ein O-Ring ist; und
die Kolbenringanordnung erste, zweite und dritte Kolbenringe aufweist, jeder aus einer Zusammensetzung von Polyimid und Polytetrafluorethylen hergestellt, die ersten und dritten Kolbenringe (10a, 10b) auf den Bodenoberflächen respektive getragen werden, der Kolbenring (10) zwischen ersten und dritten Kolbenringen in der axialen Richtung positioniert ist, der O-Ring aus der Berührung mit den ersten und dritten Kolbenringen und in Berührung mit nur dem zweiten Kolbenring zurückgehalten wird, um normal nur den zweiten Kolbenring radial auswärts mit Bezug auf den Kolben zu drängen, um so gleitfähig gegen eine innere Umfangsoberfläche des Zylinders gehalten zu werden.

2. Ein Kolbenaufbau nach Anspruch 1, worin der O-Ring und der zweite Kolbenring im wesentlichen die gleiche Breite wie einander in der axialen Richtung aufweisen.

3. Ein Kolbenaufbau nach Anspruch 1, worin die zweite Rille und der zweite Kolbenring im wesentlichen die gleiche Breite wie einander in der axialen Richtung aufweisen.

4. Eine pneumatisch angetriebene Befestigertreibmaschine, die einen Kolbenaufbau nach einem der vorhergehenden Ansprüche eingliedert.

## Revendications

1. Structure de piston à utiliser dans un cylindre (3) dans une machine pour l'enfoncement d'attaches actionnée pneumatiquement, qui comprend:
- un piston (4) apte à être placé de façon coulissante dans le cylindre et à être couplé à un foret d'enfoncement (12), ledit piston ayant une première rainure (11) définie dans la surface de sa circonférence extérieure et une seconde rainure (11a) définie radialement à l'intérieur de ladite première rainure, ladite première rainure étant plus large que ladite seconde rainure dans la direction axiale dudit piston,
- une âme annulaire (5) en élastomère placée dans ladite seconde rainure, et
- un ensemble (10, 10a, 10b) formant segment de piston placé dans ladite première rainure, ladite première rainure ayant des surfaces de base (11a, 11b) qui sont placées une sur chaque côté de ladite seconde rainure et qui supportent ledit ensemble formant segment de piston,
caractérisée en ce que:
- ladite âme annulaire est un joint torique, et
- ledit ensemble formant segment de piston comprend des premier, second et troisième segments de piston faits chacun d'un composite de polyimide et de polytétrafluoréthylène, lesdits premier et troisième segments (10a, 10b) étant respectivement supportés sur lesdites surfaces de base, ledit second segment (10) étant placé entre lesdits premier et troisième segments dans la direction axiale, ledit joint torique étant maintenu hors de contact avec lesdits premier et troisième segments et en contact avec le seul second segment pour pousser normalement le seul second segment radialement vers l'extérieur par rapport audit piston de manière à être maintenu de façon coulissante contre une surface de la circonférence intérieure du cylindre.

2. Structure de piston selon la revendication 1, dans laquelle ledit joint torique et ledit second segment de piston ont sensiblement la même largeur l'un que l'autre dans ladite direction axiale.

3. Structure de piston selon la revendication 1, dans laquelle ladite seconde rainure et ledit second segment de piston ont sensiblement la même largeur l'un que l'autre dans ladite direction axiale.

4. Machine pour l'enfoncement d'attaches actionnée pneumatiquement, qui comprend une structure de piston conforme à l'une quelconque des précédentes revendications.
